# EUROPEAN PATENT APPLICATION

(11) **EP 1 906 320 A1**
(43) Date of publication of application: **02.04.2008**
(21) Application number: 07116845.4
(22) Date of filing: 20.09.2007
(51) Int. Cl.: G06F 17/30

(54) **Method of automatically generating music playlists based on user-selected tempo pattern**

(30) Priority: 27.09.2006 US 528086
(71) Applicant: Delphi Technologies, Inc., Troy, Michigan 48007 (US)
(72) Inventor: Toms, Mona L., Carmel, MI 46032 (US); Szczublewski, Francis E., Macomb, MI 48044 (US)
(74) Representative: Denton, Michael John

(57) **Abstract**

A music playlist is automatically generated based on a user-selected tempo pattern (20), and optionally, a user-selected time duration (i.e., play time) over which the selected tempo pattern will play (30). The user can select a predefined tempo pattern (22) or create a custom tempo pattern (24, 26). The available music files are scanned based on tempo, and music files meeting the user's tempo components are selected and arranged according to the selected tempo pattern and time duration (28, 36).

## Description

### TECHNICAL FIELD

The present invention relates to automatic generation of music playlists, and more particularly to a method of generating a playlist based on a user-selected tempo pattern.

### BACKGROUND OF THE INVENTION

As electronic access and storage of digital music files have become more prevalent, audio playback systems (both vehicular and non-vehicular) have increasingly been provided with the capability of automatically generating music playlists. Alternately, the playlist can be generated with a personal computer, and then downloaded to a portable media device for playback by an audio system. In any event, the user is typically prompted to select various playlist criteria, such as genre, artist, album title, and so forth. Data corresponding to such criteria is usually available in standard ID3 tags attached to the music files. Other possible criteria that require signal processing or subjective analysis include the mood and tempo of the music. An example of a processing method for characterizing music by tempo is disclosed in the U.S. Patent No. 6,657,117, incorporated herein by reference. The playlist routine scans the available music file database, and creates a set of music files (i.e., a playlist) matching the user-established criteria.

### SUMMARY OF THE INVENTION

The present invention is directed to an improved automatic playlist generation method where the user selects a tempo pattern for the music, and optionally a time duration over which the selected tempo pattern will play. The user can select a predefined tempo pattern or create a custom tempo pattern. The method involves sorting the available music files by tempo, and then arranging them to match the selected pattern, and time duration if appropriate.

### BRIEF DESCRIPTION OF THE DRAWINGS

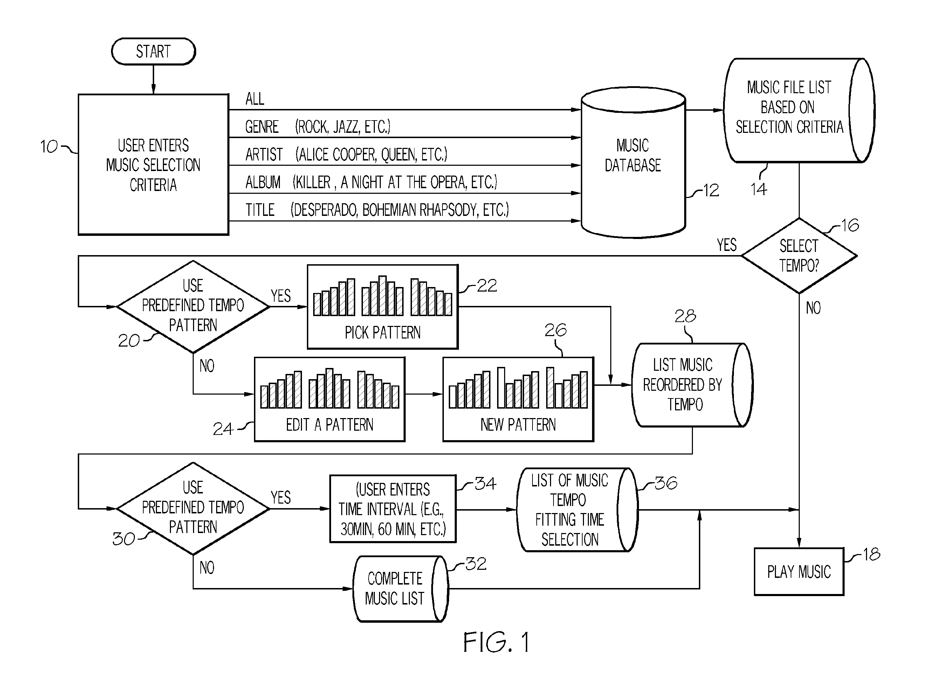

FIG. 1 is a process flow diagram of a playlist generation method according to the present invention.

### DESCRIPTION OF THE PREFERRED EMBODIMENT

FIG. 1 illustrates the method of the present invention as a process flow that involves user interaction with a system, which may be a vehicular or non-vehicular audio playback device (a MP3 player, for example) or a personal computer. The system may be a state machine or a programmed microprocessor, for example. The music database from which music files are selected may be stored locally in the system, or in a remote location accessible by a communication network. In the illustrated embodiment, it is assumed that the user's system downloads selected music files from a database, resident or nonresident.

Referring to FIG. 1, the process is initiated by prompting the user to select one or more categories of music files from which the playlist will be generated, as indicated at block 10. The category may be all-inclusive (all) or selective based on music genre(s) (rock, jazz, etc.), artist(s), or even album or song title(s). The category request is submitted to the database 12, which provides a music file list 14 satisfying the user-selected music categories. As indicated at blocks 16-18, the user has the option of play-listing all of the music files in the retrieved order or a random order, or first arranging them by tempo. If tempo selection is desired, the user has the option of selecting a predefined tempo pattern or creating a custom tempo pattern, as indicated at block 20. In either event, a tempo pattern comprises a series of time-ordered tempo components having changing tempo values. By way of example, block 22 illustrates three different predefined tempo patterns: ascending, peaked, and descending. The tempo components of each pattern are represented as a series of bars ordered left-to-right in time, the height of each bar indicating a desired song tempo (i.e., beats per minute) on a relative scale. A playlist based on a selected tempo pattern will include one or more songs for any given bar of the pattern, provided that the music file listing of block 14 includes at least one song whose tempo matches the tempo indicated by the bar height. If the user desires to create a custom tempo pattern, a selected one of the predefined patterns can be edited, as indicated at blocks 24-26. In the illustration, the user selects the ascending tempo pattern, and then increases the height of the first bar to form a custom pattern. The selected pattern from block 22 or block 26 becomes the tempo pattern request. Block 28 scans the downloaded music files for tempo, selects the music files whose tempo matches the tempo components of the requested pattern, and sorts the selected music files according to the tempo pattern. By way of example, the tempo of a given music file can be deemed to match a particular tempo component if its tempo is within a range of tempos centered about the component's value. If the music files are not already characterized by their tempo, block 28 also includes a tempo signal processing algorithm such as disclosed in the aforementioned U.S. Patent No. 6,657,117, for example.

Once the downloaded music files have been selected and arranged by tempo to match a user-selected tempo pattern at block 28, the user has the option of selecting a time interval (i.e., a music play time) for the playlist, as indicated at block 30. If no time duration is selected, the list of music files created at block 28 becomes the playlist, as indicated at blocks 32 and 18. A user wanting to select a playlist time duration can select a prescribed or custom interval as indicated at block 34, whereafter block 36 creates a listing of music files from the list created at block 28 to approximately satisfy the selected time duration, provided that the duration can be achieved with no repetition of any given music file. For example, the listing created at block 36 may include a determined number of music files for each tempo component of the user-selected tempo pattern. The completed list becomes the playlist, and is stored as indicated at block 18.

In summary, the present invention provides a novel method of automatically creating music playlists, where a user can select a tempo pattern for the playlist, and also the playlist duration. The user-selected options are preferably implemented using a graphical user interface as suggested in FIG. 1 for ease of use and to minimize driver distraction if implemented in a vehicle audio system. While the invention has been described with respect to the illustrated embodiment, it is recognized that numerous modifications and variations in addition to those mentioned above will occur to those skilled in the art. Accordingly, it is intended that the invention not be limited to the disclosed embodiment, but that it have the full scope permitted by the language of the following claims.

## Claims

1. A method of automatically generating a music playlist, comprising the steps of:
establishing a listing of available music files (14);
acquiring a user-selected tempo pattern including a series of time-ordered tempo components having changing tempo values (20, 22, 24, 26);
selecting music files having tempos that match the tempo components of the user-selected tempo pattern, and sorting the selected music files by their tempo (28); and
generating the music playlist from the selected music files (32).

2. The method of claim 1, where said user-selected tempo pattern is selected from a set of predefined tempo patterns (20, 22).

3. The method of claim 1, including the steps of:
selecting a predefined tempo pattern (24); and
editing one or more tempo components of said predefined tempo pattern to form said user-selected tempo pattern (26).

4. The method of claim 1, where said available music files are music files that satisfy user-established criteria specifying at least one of: genre, artist, album, title, mood and all (10, 12, 14).

5. The method of claim 1, including the step of:
acquiring a user-selected music play time for said playlist (30, 34); and
generating the music playlist such that its play time is approximately equal to the user-selected music play time (36).
